# EUROPÄISCHE PATENTSCHRIFT

(11) **EP 2 809 497 B1**
(45) Veröffentlichungstag und Bekanntmachung des Hinweises auf die Patenterteilung: **07.10.2015**
(21) Anmeldenummer: 13706170.1
(22) Anmeldetag: 01.02.2013
(51) Int. Cl.: B29C 57/04, B21D 41/02

(54) **EXPANSIONSKOPF FÜR AUFWEITWERKZEUGE UND DIESEN UMFASSENDES EXPANSIONSWERKZEUG**
EXPANSION HEAD FOR EXPANSION TOOLS AND EXPANSION TOOL COMPRISING SAID EXPANSION HEAD
TÊTE D'EXPANSION POUR ÉLARGISSEURS ET ÉLARGISSEUR COMPRENANT LADITE TÊTE D'EXPANSION

(30) Priorität: 03.02.2012 DE 202012100361 U
(43) Veröffentlichungstag der Anmeldung: 10.12.2014
(73) Patentinhaber: REHAU AG + Co, 95111 Rehau (DE)
(72) Erfinder: BÄRTHLEIN, Sebastian, 91052 Erlangen (DE); SAPPER, Richard, 91126 Schwabach (DE); CHRISTOPH, Sven, 91058 Weisendorf (DE)
(86) Internationale Anmeldenummer: PCT/EP2013/000311
(87) Internationale Veröffentlichungsnummer: WO 2013/113508

(56) Entgegenhaltungen:
- EP-A1- 2 130 664
- EP-A2- 0 718 057

## Beschreibung

Die vorliegende Erfindung betrifft einen Expansionskopf für Aufweitwerkzeuge für hohle Werkstücke, insbesondere für die Enden von Kunststoffrohren und Metall-Kunststoff-Verbundrohren, wobei der Expansionskopf eine Überwurfkappe mit einem radial einwärts gerichteten Führungsflansch und einem Satz von sektorförmig ausgebildeten Spreizbacken umfasst, die jeweils einzeln durch einen Innenflanschsektor, der mit dem Führungsflansch überlappt, in der Überwurfkappe radial beweglich aufgenommen ist, wobei der Satz von sektorförmig ausgebildeten Spreizbacken zwischen einem geschlossenen Zustand und einem Expansionszustand beweglich ist und im geschlossenen Zustand durch eine umhüllende der Außenwandungen des Satzes von Spreizbacken annähernd eine Zylindermantelfläche ausgebildet ist.

Derartige Expansionsköpfe sind beispielsweise aus der EP 0 718 057 A2 und der EP 0 878 287 A1 bekannt. Die Expansionsköpfe bestehen aus einzelnen Segmenten, den sog. Spreizbacken, deren Basisteile gemeinsam in einer Überwurfkappe aufgenommen sind und die in radialer Richtung nach außen beweglich sind und die über Trennfugen voneinander getrennt sind. Derartige Expansionsköpfe werden an Aufweitwerkzeugen angebracht und insbesondere über eine Schraubverbindung mit diesen verbunden. Die Aufweitwerkzeuge sind grundsätzlich aus einem Pressgerät mit einem Dorn, der in oder an dem Gehäuse des Pressgerätes axial verschiebbar gehalten ist und an seinem einen axialen Endbereich eine Kegelfläche aufweist, und einem Expansionskopf, der vorzugsweise über eine Aufnahmevorrichtung für den Expansionskopf an dem Pressgerät festlegbar ist, aufgebaut. Durch eine Antriebsvorrichtung, die manuell oder maschinell angetrieben werden kann, wird der Dorn in axialer Richtung in Richtung des Expansionskopfes bewegt. An der Innenseite definieren die Spreizbacken des Expansionskopfes eine zentrale kegelige Aufnahme, in die die Kegelfläche des vom Pressgerät in axialer Richtung verschiebbaren Dorns eingreift. Bei Betätigung des Pressgerätes wird der Dorn in den Expansionskopf hineingedrückt, wobei es zu einem Kontakt zwischen der Kegelfläche des Dorns und der von den Spreizbacken gebildeten Aufnahme kommt. Bei weiterer axialer Bewegung des Dorns in Richtung des Expansionskopfes werden die Spreizbacken radial nach außen gedrückt und es kommt zu einem radialen Hub der Spreizbacken, so dass die Spreizbacken die Enden eines hohlen Werkstücks, insbesondere eines Kunststoffrohres oder eines Metall-Kunststoff-Verbundrohres, in das der Expansionskopf eingeführt ist, aufweiten. Dabei gehen die Spreizbacken vom geschlossenen Zustand in den Expansionszustand über. Bei einer radialen Rückwärtsbewegung des Dorns aus dem Expansionskopf werden die Segmente durch Rückstellmittel (beispielsweise eine ringförmige Zugfeder oder ein elastischer O-Ring) in ihre Ausgangsposition zurückbewegt. Um beim Aufweitprozess ein möglichst gleichmäßiges Aufweiten des hohlen Werkstücks erzielt zu können, kann es erforderlich sein, die Position des Expansionskopfes in dem Rohrende nach Lösen der Spreizbacken um einen vorgegebenen Winkel zu verdrehen (bei Expansionsköpfen mit sechs Spreizbacken sollte die Drehung um einen Winkel von vorzugsweise etwa 30° erfolgen) und einen zweiten Aufweitprozess durchzuführen. Ein regelmäßiges Aufweiten eines Rohrendes ist deshalb erforderlich, um nach Einführen eines Verbindungsstückes durch Verpressen mit einer über das Rohrende geführten Schiebe- oder Presshülse (axiales Aufschieben einer Schiebehülse über das Rohrende mit darin eingeführtem Verbindungsstück bei einer Schiebehülsenverbindung bzw. radiales Verpressen einer Presshülse über ein Rohrende mit darin eingeführtem Verbindungsstück) eine dichte Verbindung zu erzielen. Um das Einprägen der scharfkantigen Trennfugen in das Material des aufzuweitenden Rohres zu vermeiden, schlägt die EP 0 718 057 A2 vor, die Spreizbacken beiderseits einer jeder Trennfuge an den achsparallelen Kanten der Arbeitsflächen zu brechen. Ein derartiges Brechen der Kanten an den Trennfugen hat jedoch den Nachteil, dass die Lücke zwischen zwei angrenzenden Spreizbacken größer wird, so dass die Stützfläche der Spreizbackeneinsätze an der Rohrinnenwand kleiner ist, wodurch es notwendig wird, eine Aufweitung mit einem größeren axialen Hub durchzuführen. Dadurch tritt das Risiko einer zu großen Dehnung des Rohrmaterials unter Schwächung des Rohres oder Verschlechterung seiner elastischen Eigenschaften auf. Gemäß der EP 0 878 287 A1 wird dieses Problem dadurch gelöst, dass die Arbeitsfläche, d.h. die Fläche der Spreizbacken, die beim Aufweitprozess an der Rohrinnenwand anliegt, im Bereich jeder ihrer Flanken zu den Trennfugen eine Flachstelle aufweist, die zur Seite des neben dieser Arbeitsfläche liegenden Spreizbacke rechtwinklig ist. Die in diesen Dokumenten beschriebenen Expansionsköpfe gewährleisten zwar eine schonende Aufweitung des Rohres. Allerdings ist bei Durchführung eines Aufweitvorgangs unter Verwendung eines derartigen Expansionskopfes insbesondere bei größeren Rohrdurchmessern (beispielsweise ab etwa 25 mm Rohrdurchmesser) ein erheblicher Kraftaufwand erforderlich.

Vor diesem Hintergrund liegt der vorliegenden Erfindung die Aufgabe zugrunde, einen Expansionskopf zur Verfügung zu stellen, der die Nachteile des Stands der Technik überwindet. Der erfindungsgemäße Expansionskopf soll insbesondere bei relativ dickwandigen Rohren auch bei manueller Betätigung einen reduzierten Kraftaufwand erforderlich machen. Darüber hinaus soll die Lebensdauer des Expansionskopfes sowie der damit verwendeten Aufweitwerkzeuge erhöht werden können. Eine weitere Aufgabe der vorliegenden Erfindung liegt in der Bereitstellung eines entsprechenden Aufweitwerkzeuges mit einem erfindungsgemäßen Expansionskopf.

Diese und andere Aufgaben werden durch einen Expansionskopf mit den Merkmalen des Anspruchs 1 bzw. durch ein Aufweitwerkzeug mit den Merkmalen des Anspruchs 10 gelöst. Bevorzugte Ausführungsformen des erfindungsgemäßen Expansionskopfes sind in den abhängigen Ansprüchen beschrieben. Die grundsätzliche Funktionsweise des erfindungsgemäßen Aufweitwerkzeugs entspricht dabei der Funktionsweise, wie sie im Zusammenhang mit den in der EP 0 718 057 A2 und der EP 0 878 287 A1 beschriebenen Expansionsköpfen hierin beschrieben ist.

Gemäß der vorliegenden Erfindung wurde erkannt, dass die zur Durchführung eines Aufweitprozesses erforderliche Kraft reduziert werden kann, wenn die Fläche der Spreizbacken, die an der Rohrinnenseite anliegt, reduziert wird. Bei Verwendung manueller Aufweitwerkzeuge bei einem Aufweitvorgang stellt insbesondere bei hohen Rohrdurchmessern vor allem der erste Aufweitvorgang hohe Ansprüche an den Kraftaufwand, während der zweite Aufweitvorgang relativ zum ersten sehr leicht geht. Reduziert man die Fläche, mit der die Spreizbacken vor dem ersten Aufweitvorgang an der Rohrinnenseite anliegt, wird die Kraft, die zum Rohraufweiten erforderlich ist, zwischen dem ersten und dem zweiten Aufweitvorgang gleichmäßiger verteilt. Für eine ausreichende Reduktion des Kraftaufwands zum Aufweiten insbesondere von Rohren mit größerem Rohrdurchmesser ist eine Verringerung der Anflagefläche der Spreizbacken an der Rohrinnenseite von mindestens 25 % erforderlich, während bei einer Reduktion der der Anlagefläche der Spreizbacken an der Rohrinnenseite von mehr als 75 % die Gefahr einer mechanischen Schwächung des erfindungsgemäßen Expansionskopfes auftritt. Durch das Verdrehen des Aufweitkopfes um einen Winkel, der etwa dem halben Öffnungswinkel des durch eine Spreizbacke gebildeten Sektors entspricht (bei einem Satz von sechs Spreizbacken um etwa 30° oder um einen Winkel von einem ganzzahligen Vielfachen des Öffnungswinkels des Sektors plus etwa 30°) vor der Durchführung des zweiten Aufweitvorganges und wird das Rohr dann beim zweiten Aufweitvorgang vollständig aufgeweitet. Da Rohre mit hohem Rohrdurchmesser relativ dickwandig sind, ist das schonende Aufweiten der Rohre von geringerer Bedeutung. Der verringerte Kraftaufwand reduziert darüber hinaus die maximale Kraft im Expansionskopf und in dem Aufweitwerkzeug, so dass dadurch die Lebensdauer dieser Komponenten erhöht werden kann.

Dementsprechend liegt die vorliegende Erfindung in der Bereitstellung eines Expansionskopfes für Aufweitwerkzeuge für hohle Werkstücke, insbesondere für die Enden von Kunststoffrohren und Metall-Kunststoff-Verbundrohren, der eine Überwurfkappe mit einem radial einwärts gerichteten Führungsflansch und einen Satz von sektorförmig ausgebildeten Spreizbacken umfasst, die jeweils einzeln durch einen Innenflanschsektor, der mit dem Führungsflansch überlappt, in einer Überwurfkappe radial beweglich aufgenommen sind, insbesondere durch den Innenflanschsektor in einer radialen Nut der Überwurfkappe radial beweglich am Führungsflansch geführt sind, wobei der Satz von sektorförmig ausgebildeten Spreizbacken zwischen einem geschlossenen Zustand und einem Expansionszustand beweglich ist und im geschlossenen Zustand durch eine Umhüllende der Außenwandungen des Satzes von Spreizbacken annähernd eine Zylindermantelfläche ausgebildet ist, wobei jede Spreizbacke wenigstens eine sich in Richtung der Längsachse der Spreizbacken erstreckende Vertiefung aufweist, so dass die Fläche der Außenwandungen des Satzes von Spreizbacken im geschlossenen Zustand des Expansionskopfes 25 % bis 75 % der Fläche der Umhüllenden der Außenwandungen des Spreizbackensatzes entspricht.

Der Begriff "Umhüllende der Außenwandungen", wie er hierin verwendet wird, bezieht sich auf die Umhüllende eines durch die Außenwandungen der Spreizbacken im geschlossenen Zustand des erfindungsgemäßen Expansionskopfes näherungsweise gebildeten Zylinders, wenn die Vertiefung(en) in den Spreizbacken nicht vorhanden wäre(n) und stellt annähernd eine entsprechende Zylindermantelfläche dar.

Dabei kann es sich als günstig erweisen, wenn die die Vertiefung ungefähr in der Mitte der Außenwandung der Spreizbacke angeordnet ist. Eine derartige Anordnung der Vertiefung ermöglicht eine gleichmäßige Aufweitung des Rohrendes nach dem zweiten Aufweitvorgang.

Ebenso kann es sich als günstig erweisen, wenn mindestens eine der Spreizbacken mindestens zwei Vertiefungen aufweist. Auf diese Weise wird die mechanische Schwächung der Spreizbacken auf mehrere Stellen verteilt, was die Langlebigkeit des erfindungsgemäßen Expansionskopfes fördert. In diesem Zusammenhang kann es von besonderem Vorteil sein, wenn jeweils eine Vertiefung an jedem seitlichen Rand der Außenwandung jeder Spreizbacke angeordnet ist. Auf diese Weise ergänzen sich die Vertiefungen von zwei benachbarten Spreizbacken zu einer entsprechenden Ausnehmung mit größerer Breite, so dass eine geringere Anlagefläche der Spreizbacken an der Rohrinnenwand bei hoher mechanischer Stabilität und damit Langlebigkeit des erfindungsgemäßen Expansionskopfes gewährleistet ist. Dabei kann es sich auch als besonders nützlich erweisen, wenn sich die beiden jeweils am seitlichen Rand der Außenwandung angeordneten Vertiefungen jeweils über die gesamte Dicke der Spreizbacke erstrecken.

Im Falle mehrerer Vertiefungen an der Außenfläche einer Spreizbacke kann es auch von Vorteil sein, wenn die Vertiefungen etwa symmetrisch zu einer in Längsrichtung des Expansionskopfes verlaufenden Mittelachse der Außenwandung der jeweiligen Spreizbacke angeordnet sind. Dies trägt zu einer hohen mechanischen Stabilität und damit Langlebigkeit des erfindungsgemäßen Expansionskopfes bei.

Es kann auch hilfreich sein, wenn die Spreizbacken an ihrer der Überwurfkappe abgewandten Seite eine Verjüngung oder Fase aufweisen. Dadurch kann ein gleichmäßiger Übergang zwischen dem aufgeweiteten und dem nicht aufgeweiteten Teil des hohlen Werkstücks nach dem Aufweitvorgang erzielt werden.

Ebenso kann es sich als günstig erweisen, wenn die Kanten der Spreizbacken abgerundet, gebrochen oder angefast sind. Dies führt dazu, dass sich die Spreizbacken beim Aufweitvorgang weniger stark in das Material der Rohrinnenwand einprägen, so dass eine stabiler Rohrverbindung gebildet werden kann.

Ebenso kann es sich als vorteilhaft erweisen, wenn die Fläche der Außenwandungen des Satzes von Spreizbacken im geschlossenen Zustand des Expansionskopfes 40 % bis 60 %, insbesondere 45 % bis 55 % und vorzugsweise 48 % bis 52 % der Fläche der Umhüllenden der Außenwandungen des Spreizbackensatzes entspricht. Auf diese Weise wird der Kraftaufwand besonders gleichmäßig zwischen dem ersten und dem zweiten Aufweitvorgang verteilt.

Im Folgenden soll die vorliegende Erfindung unter Bezugnahme auf die in den Figuren dargestellte Ausführungsform im Detail erläutert werden. Es versteht sich, dass die vorliegende Erfindung nicht auf die gezeigten Ausführungsformen beschränkt sein soll.

### Kurze Beschreibung der Zeichnungen

Figur 1 a zeigt eine perspektivische Ansicht eines Expansionskopfes gemäß einer Ausführungsform der vorliegenden Erfindung im geschlossenen Zustand.
Figur 1b zeigt eine perspektivische Ansicht des in Fig. 1 a dargestellten im geöffneten Zustand.
Figur 1c zeigt eine Querschnittsansicht des in Fig. 1b dargestellten Expansionskopfes im geöffneten Zustand.
Figur 1d zeigt eine Draufsicht auf die Spreizbacken des in Fig. 1b dargestellten Expansionskopfes mit aufgesetztem Rohrende nach dem ersten Aufweitvorgang.
Figur 2 zeigt eine perspektivische Ansicht eines Satzes von Spreizbacken eines Expansionskopfes gemäß einer weiteren Ausführungsform der vorliegenden Erfindung.
Figur 3 zeigt eine perspektivische Ansicht eines Satzes von Spreizbacken eines Expansionskopfes gemäß einer weiteren Ausführungsform der vorliegenden Erfindung.
Figur 4 zeigt eine perspektivische Ansicht eines Satzes von Spreizbacken eines Expansionskopfes gemäß einer weiteren Ausführungsform der vorliegenden Erfindung.
Figur 5 zeigt eine perspektivische Ansicht eines Satzes von Spreizbacken eines Expansionskopfes gemäß einer weiteren Ausführungsform der vorliegenden Erfindung.
Figur 6 zeigt eine perspektivische Ansicht eines Satzes von Spreizbacken eines Expansionskopfes gemäß einer weiteren Ausführungsform der vorliegenden Erfindung.

### Detaillierte Beschreibung bevorzugter Ausführungsformen

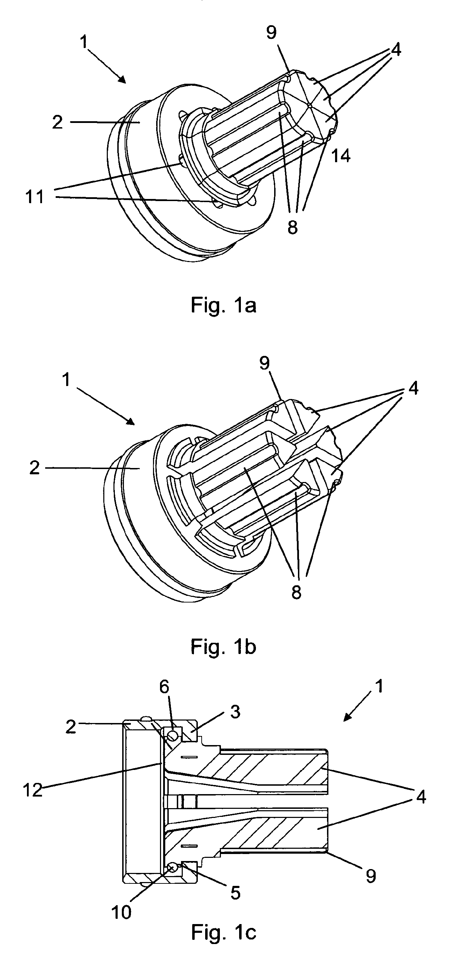

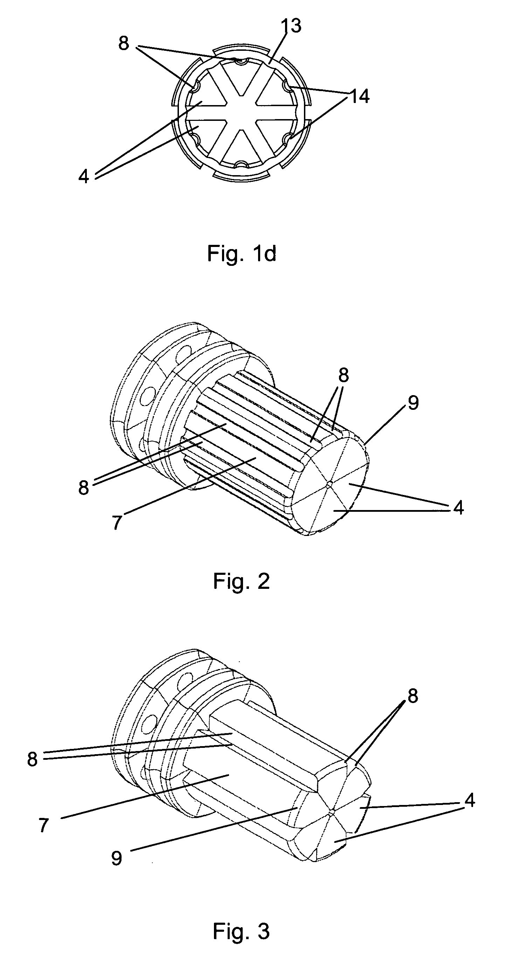

In Figur 1 ist ein Expansionskopf gemäß einer Ausführungsform der vorliegenden Erfindung im geschlossenen Zustand (Fig. 1a) und im geöffneten Zustand oder Expansionszustand (Fig. 1b bis Fig. 1d) gezeigt. Der erfindungsgemäße Expansionskopf 1 umfasst einen Satz von sechs Spreizbacken 4 sowie eine Überwurfmutter 2, wobei die Spreizbacken 4 durch die Öffnung der Überwurfmutter 2 geführt sind. Im geschlossen Zustand bilden die aus der Überwurfmuttter 2 herausragenden Teile der Spreizbacken 4 einen etwa zylinderförmigen Aufweitbereich. Im geschlossenen Zustand beschreibt die Außenwandung 7 der Spreizbacken 4 annähernd eine Zylindermantelfläche. Als "Aufweitbereich" wird hierin der Bereich des Expansionskopfes 1 bezeichnet, in dem sich beim Aufweitvorgang das aufzuweitende hohle Werkstück befindet. Dieses liegt dabei an der Außenseite der Spreizbacken 4 an. Zusammen ergibt der Satz von sektorförmig ausgebildeten Spreizbacken 4 im geschlossenen Zustand des Expansionskopfes 1 eine geschlossene Form mit einer im Wesentlichen zylindrischen Form im Aufweitbereich des Expansionskopfes 1. An ihrer der Überwurfkappe 2 abgewandten Seite weisen die Spreizbacken 4 jeweils eine Verjüngung 9 oder Fase auf, die vorzugsweise als abgerundeter Randbereich ausgebildet ist. Durch eine derartige Verjüngung 9 oder Fase kann ein gleichmäßiger Übergang zwischen dem aufgeweiteten und dem nicht aufgeweiteten Teil des hohlen Werkstücks nach dem Aufweitvorgang erzielt werden.

Jede der Spreizbacken 4 ist dabei sektorförmig ausgebildet und weist an der Außenwandung 7 eine sich in Richtung der Längsachse der Spreizbacken 4 erstreckende Vertiefung 8 auf. Die Vertiefung 8 ist dabei mittig in der Außenfläche 7 der Spreizbacke 4 ausgebildet und weist einen halbkreisförmigen Querschnitt auf. In anderen Ausführungsformen der vorliegenden Erfindung sind alternativ auch andere Querschnitte, beispielsweise ovale, dreieckige, rechteckige, quadratische Querschnitte sowie Kombinationen der genannten Querschnittformen, möglich. Insgesamt erstrecken sich die Vertiefungen 8 der Spreizbacken 4 dabei über etwa 30 % der Fläche der Umhüllenden der Außenwandungen 7 des Spreizbackensatzes im geschlossenen Zustand des Expansionskopfes 1. An ihrer tiefsten Stelle weisen die Vertiefungen 8 eine Tiefe auf, die etwa 15 % des Durchmessers des durch die Spreizbacken 4 gebildeten Zylinders entspricht.

Der in Fig. 1 a dargestellte Expansionskopf 1 ist in Fig. 1b im geöffneten Zustand gezeigt. Dabei sind die Spreizbacken 4 jeweils radial nach außen versetzt angeordnet, so dass sie nun beabstandet voneinander angeordnet sind.

Wie die in Fig. 1c gezeigte Querschnittansicht des erfindungsgemäßen Expansionskopfes 1 zeigt, weist die Überwurfkappe 2 einen radial einwärts gerichteten Führungsflansch 3 und einen Satz von sektorförmig ausgebildeten Spreizbacken 4. Jeder der sektorförmig ausgebildeten Spreizbacken 4 ist einzeln durch einen Innenflanschsektor 5, der mit dem Führungsflansch 3 überlappt, in einer radialen Nut 6 in der Überwurfkappe 2 radial beweglich geführt. Die Innenflanschsektoren 5 weisen auf ihren Außenseiten Nutsektoren auf, die sich im Gesamtumfang des Expansionskopfes 1 zu einer umlaufenden Nut an der Außenseite der Innenflanschsektoren 5 ergänzen, in die ein ringförmiges Rückführmittel 10 für die Rückführung der Spreizbacken 4 vom geöffneten in den geschlossenen Zustand des Expansionskopfes 1 aufgenommen ist. Das Rückführmittel 10 ist dabei bevorzugt so gewählt, dass seine Rückstellkraft für die Rückführung der Spreizbacken 4 vom offenen in den geschlossenen Zustand ausreichend ist. In der dargestellten Ausführungsform handelt es sich bei dem Rückführmittel 10 um einen elastischen O-Ring. Alternativ kann auch eine ringförmige Zugfeder in vorteilhafter Weise eingesetzt werden. In jedem der Innenflanschsektoren 5 befindet sich eine Bohrung, in der jeweils ein Ende eines Führungsstifts aufgenommen ist.

In dem Führungsflansch 3 sind radiale Führungsnuten 11 (Fig. 1 a) für die Aufnahme und die Bewegung von Führungsstiften angeordnet. Die Anzahl der Führungsnuten 11 entspricht dabei der Anzahl der Führungsstifte und damit der Anzahl der Spreizbacken 4 des Expansionskopfes 1. Die Führungsstifte können jeweils mit Presssitz in der zugehörigen Bohrung in den Innenflanschsektoren 10 fest mit den Innenflanschsektoren 10 verbunden sein. In alternativen Ausführungsformen des erfindungsgemäßen Expansionskopfes 1 können jeweils das eine Ende der Führungsstifte in ein Gewinde eingeschraubt oder mit dem Innenflanschsektor 5 verstiftet sein. Weiterhin können die Führungsstifte 8 auch einstückig an den jeweiligen Innenflanschsektor 10 angeformt sein. Ebenso kann auf eine Führung auch ganz verzichtet werden.

Zur axialen Festlegung der Spreizbacken 4 in der Überwurfkappe 2 dient ein Befestigungsmittel. In der in den Fig. 1c dargestellten Ausführungsform des erfindungsgemäßen Expansionskopfes ist eine in die Überwurfkappe 2 eingepresste Befestigungsscheibe 12 als Befestigungsmittel für die Spreizbacken 4 eingesetzt. In alternativen Ausführungsformen kann ein Sicherungsring, eine Scheibe mit einem Sicherungsring oder eine Gewindescheibe, die in ein in ein Gewinde an der Innenseite der Überwurfkappe 2 eingebracht ist, als Befestigungsmittel zum Einsatz kommen. An ihrer Innenseite sind die Spreizbacken 4 durch Kegelsegmentflächen begrenzt, die sich im geschlossenen Zustand des Expansionskopfes 1 zu einer Kegelfläche ergänzen. Der Öffnungswinkel der Kegelsegmentflächen entspricht dabei dem Kegelwinkel des Spreizdorns des Aufweitwerkzeuges. Daher wirkt die Kegelfläche des Spreizdorns beim Aufweitvorgang mit den Kegelsegmentflächen der Spreizbacken 4 zusammen. Durch Eintreiben des Spreizdorns in den Expansionskopf schiebt die Kegelfläche des Spreizdorns die Kegelsegmentflächen der Spreizbacken radial nach außen. Ist über die Außenflächen des Expansionskopfes 1 ein hohles Werkstück, beispielsweise ein Kunststoffrohr, geführt, liegen die Außenflächen des Expansionskopfes 1 zunächst an der Rohrinnenseite an. Mit zunehmender Eindringtiefe des Spreizdorns werden die Außenflächen der Spreizbacken 4 radial nach außen bewegt, wodurch das Rohrende, das über die Spreizbacken 4 geführt ist, aufgeweitet wird. Um das Risiko der Bildung von Längsriefen in dem aufgeweiteten Werkstück zu verringern, können die äußeren Kanten in Längsrichtung der Spreizbacken 4 abgerundet oder angefast sein.

Eine Draufsicht auf den Satz von Spreizbacken des erfindungsgemäßen Expansionskopfes mit darauf aufgesetztem Rohrende 13 nach einem derartigen Aufweitvorgang ist Figur 1d dargestellt. Im Bereich der Vertiefungen 8 jeder Spreizbacke 4, in denen die jeweilige Spreizbacke 4 vor dem ersten Aufweitvorgang nicht an der Innenseite des Rohrendes 13 angelegen ist, weist das aufgeweitete Rohrende eine signifikante Verformung 14 auf. Dadurch ist der Kraftaufwand beim ersten Aufweitvorgang im Vergleich zu einem ersten Aufweitvorgang mit herkömmlichem Expansionskopf ohne Vertiefungen 8 an der Außenfläche 7 der Spreizbacken 4 reduziert. Eine Wiederholung des Aufweitvorganges nach einer Drehung des Aufweitwerkzeuges um etwa 30° relativ zum Rohrende 13 erfordert dagegen einen entsprechend erhöhten Kraftaufwand im Vergleich zum zweiten Aufweitvorgang mit herkömmlichem Expansionskopf ohne Vertiefungen 8 an der Außenfläche 7 der Spreizbacken 4.

Im Folgenden wird die vorliegende Erfindung im Zusammenhang mit weiteren Ausführungsformen erläutert. Es wird dabei auf die Unterschiede eingegangen, um Wiederholungen zu vermeiden, und weitere Erläuterungen zu der in Fig. 1a bis Fig. 1d gezeigten Ausführungsform gelten auch für die weiteren Ausführungsformen entsprechend. Gleiche Bezugszeichen beziehen sich dabei auf gleiche Gegenstände.

Figur 2 zeigt den Satz von sechs Spreizbacken 4 eines Expansionskopfes 1 gemäß einer weiteren Ausführungsform der vorliegenden Erfindung in einer perspektivischen Ansicht, die an einem Ende wiederum jeweils eine Verjüngung 9 aufweisen. An der Außenwandung 7 von jeder der sektorförmig ausgebildeten Spreizbacken 4 sind jeweils zwei sich in Richtung der Längsachse der Spreizbacken 4 erstreckende Vertiefungen 8 angeordnet. Die Vertiefungen 8 sind dabei etwa symmetrisch zur Mitte der Außenfläche 7 ausgebildet und verfügen wiederum über einen halbkreisförmigen Querschnitt, wobei alternativ andere Querschnittsformen verwendet werden können. Die Vertiefungen 8 nehmen etwa 50 % der der Fläche der Umhüllenden der Außenwandungen 7 des Spreizbackensatzes im geschlossenen Zustand des Expansionskopfes 1 ein. An der tiefsten Stelle entspricht die Tiefe der Vertiefung etwa 20 % des Durchmessers des durch die Spreizbacken 4 gebildeten Zylinders.

Bei Durchführung eines Aufweitvorganges an einem Rohrende 13 werden an den Vertiefungen 8 jeweils Verformungen 14 gebildet, in diesem Fall jeweils zwei Verformungen 14 pro Spreizbacke 4. Bei Durchführung des ersten Aufweitvorgangs ist der Kraftaufwand wiederum im Vergleich zu einem ersten Aufweitvorgang mit herkömmlichem Expansionskopf ohne Vertiefungen 8 an der Außenfläche 7 der Spreizbacken 4 verringert. Eine Wiederholung des Aufweitvorganges nach einer Drehung des Aufweitwerkzeuges um etwa 30° relativ zum Rohrende 13 erfordert dagegen einen entsprechend erhöhten Kraftaufwand im Vergleich zum zweiten Aufweitvorgang mit herkömmlichem Expansionskopf ohne Vertiefungen 8 an der Außenfläche 7 der Spreizbacken 4.

Ein weiterer Satz von sechs Spreizbacken 4 eines Expansionskopfes 1 gemäß einer weiteren Ausführungsform der vorliegenden Erfindung ist in Fig. 3 in einer perspektivischen Ansicht dargestellt. Wiederum sind an der Außenwandung 7 von jeder der sektorförmig ausgebildeten Spreizbacken 4 jeweils zwei sich in Richtung der Längsachse der Spreizbacken 4 erstreckende Vertiefungen 8 angeordnet. In dieser Ausführungsform der vorliegenden Erfindung sind die Vertiefungen 8 aber am seitlichen Rand der Spreizbacken 4 angeordnet. Die Vertiefungen 8 sind jeweils als Schrägen ausgeführt, so dass sich jeweils zwei Vertiefungen 8 benachbarter Spreizbacken zu einer dreiecksförmigen Ausnehmung ergänzen. Alternativ können auch andere Querschnittsformen zum Einsatz kommen. Die Vertiefungen 8 entsprechen zusammen etwa 30 % der Fläche der Umhüllenden der Außenwandungen 7 des Spreizbackensatzes im geschlossenen Zustand des Expansionskopfes 1. An der tiefsten Stelle entspricht die Tiefe der Vertiefung etwa 35 % des Durchmessers des durch die Spreizbacken 4 gebildeten Zylinders.

Bei Durchführung eines Aufweitvorganges an einem Rohrende 13 wird an den durch die Vertiefungen 8 gebildeten Ausnehmungen jeweils eine Verformung des Rohrendes 13 gebildet. Bei Durchführung des ersten Aufweitvorgangs ist der Kraftaufwand auch für diese Ausführungsform im Vergleich zu einem ersten Aufweitvorgang mit herkömmlichem Expansionskopf ohne Vertiefungen 8 an der Außenfläche 7 der Spreizbacken 4 verringert. Eine Wiederholung des Aufweitvorganges nach einer Drehung des Aufweitwerkzeuges um etwa 30° relativ zum Rohrende 13 erfordert dagegen einen entsprechend erhöhten Kraftaufwand im Vergleich zum zweiten Aufweitvorgang mit herkömmlichem Expansionskopf ohne Vertiefungen 8 an der Außenfläche 7 der Spreizbacken 4.

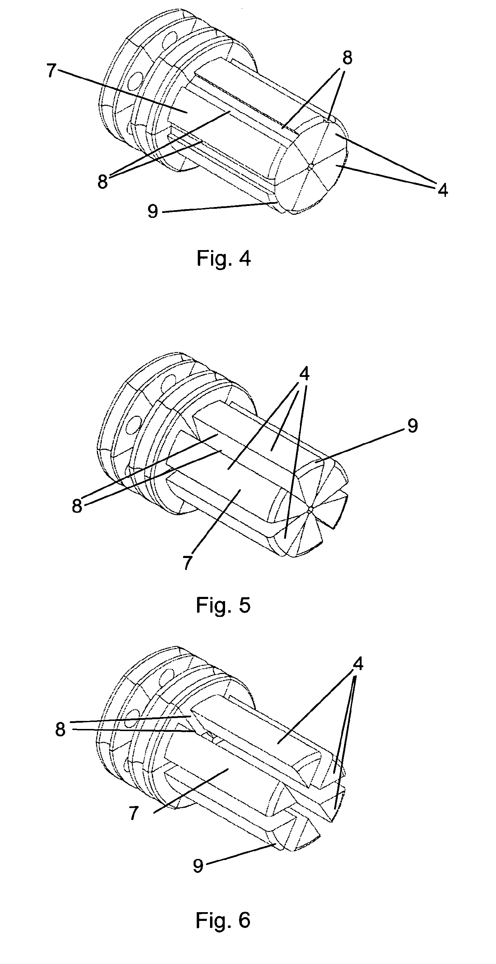

Eine perspektivische Ansicht des Satzes von sechs Spreizbacken 4 eines Expansionskopfes 1 gemäß einer weiteren Ausführungsform der vorliegenden Erfindung ist in Fig. 4 gezeigt. Auch bei dieser Ausführungsform sind an den seitlichen Rand der sektorförmig ausgebildeten Spreizbacken 4 jeweils sich in Richtung der Längsachse der Spreizbacken 4 erstreckende Vertiefungen 8 angeordnet. Diese weisen jedoch einen rechtwinkligen Querschnitt auf, so dass sich die Vertiefungen 8 benachbarter Spreizbacken zu einer ebenfalls rechtwinkligen Ausnehmung ergänzen. Alternativ können auch hier andere Querschnittsformen zum Einsatz kommen. Die Vertiefungen 8 nehmen etwa 25 % der Fläche der Umhüllenden der Außenwandungen 7 des Spreizbackensatzes im geschlossenen Zustand des Expansionskopfes 1 ein. Die Tiefe der Vertiefung entspricht etwa 10 % des Durchmessers des durch die Spreizbacken 4 gebildeten Zylinders.

Bei Durchführung eines Aufweitvorganges an einem Rohrende 13 wird an den durch die Vertiefungen 8 gebildeten Ausnehmungen jeweils eine Verformungen des Rohrendes 13 gebildet. Bei Durchführung des ersten Aufweitvorgangs ist der Kraftaufwand auch für diese Ausführungsform im Vergleich zu einem ersten Aufweitvorgang mit herkömmlichem Expansionskopf ohne Vertiefungen 8 an der Außenfläche 7 der Spreizbacken 4 verringert. Eine Wiederholung des Aufweitvorganges nach einer Drehung des Aufweitwerkzeuges um etwa 30° relativ zum Rohrende 13 erfordert dagegen einen entsprechend erhöhten Kraftaufwand im Vergleich zum zweiten Aufweitvorgang mit herkömmlichem Expansionskopf ohne Vertiefungen 8 an der Außenfläche 7 der Spreizbacken 4.

Ein weiterer Satz von sechs Spreizbacken 4 eines Expansionskopfes 1 gemäß einer weiteren Ausführungsform der vorliegenden Erfindung ist in Fig. 5 in einer perspektivischen Ansicht dargestellt. An der Außenwandung 7 jeder der sektorförmig ausgebildeten Spreizbacken 4 sind jeweils zwei sich in Richtung der Längsachse der Spreizbacken 4 erstreckende Vertiefungen 8 angeordnet. In dieser Ausführungsform der vorliegenden Erfindung befinden sich die Vertiefungen 8 wiederum am seitlichen Rand der Spreizbacken 4 und sind jeweils als Schrägen ausgeführt. Auf diese Weise bilden jeweils zwei Vertiefungen 8 benachbarter Spreizbacken miteinander eine dreiecksförmigen Ausnehmung, die sich bis zum Mittelachse des durch die Spreizbacken 4 gebildeten Zylinders erstreckt. Alternativ können auch hier andere Querschnittsformen zum Einsatz kommen. Die Vertiefungen 8 entsprechen zusammen etwa 35 % der Fläche der Umhüllenden der Außenwandungen 7 des Spreizbackensatzes im geschlossenen Zustand des Expansionskopfes 1. An der tiefsten Stelle entspricht die Tiefe der Vertiefung etwa 40 % des Durchmessers des durch die Spreizbacken 4 gebildeten Zylinders.

Bei Durchführung eines Aufweitvorganges an einem Rohrende 13 wird an den durch die Vertiefungen 8 gebildeten Ausnehmungen jeweils eine Verformung des Rohrendes 13 gebildet. Bei Durchführung des ersten Aufweitvorgangs ist der Kraftaufwand auch für diese Ausführungsform im Vergleich zu einem ersten Aufweitvorgang mit herkömmlichem Expansionskopf ohne Vertiefungen 8 an der Außenfläche 7 der Spreizbacken 4 verringert. Eine Wiederholung des Aufweitvorganges nach einer Drehung des Aufweitwerkzeuges um etwa 30° relativ zum Rohrende 13 erfordert dagegen einen entsprechend erhöhten Kraftaufwand im Vergleich zum zweiten Aufweitvorgang mit herkömmlichem Expansionskopf ohne Vertiefungen 8 an der Außenfläche 7 der Spreizbacken 4.

Fig. 6 zeigt einen weiteren Satz von sechs Spreizbacken 4 eines Expansionskopfes 1 gemäß einer weiteren bevorzugten Ausführungsform der vorliegenden Erfindung in einer perspektivischen Darstellung. Auch in dieser Ausführungsform befinden sich an der Außenwandung 7 jeder der sektorförmig ausgebildeten Spreizbacken 4 jeweils zwei sich in Richtung der Längsachse der Spreizbacken 4 erstreckende Vertiefungen 8, die in dieser Ausführungsform der vorliegenden Erfindung befinden sich die Vertiefungen 8 am seitlichen Rand der Spreizbacken 4 angeordnet sind. Die Vertiefungen 8 sind jeweils als Schrägen ausgeführt, die sich über die gesamte Dicke der Spreizbacken 4 erstrecken, wobei einander gegen überliegende Seitenflächen der Spreizbacken parallel zueinander angeordnet sind. Auf diese Weise bilden jeweils zwei Vertiefungen 8 benachbarter Spreizbacken miteinander eine rechteckige Ausnehmung, die sich bis zum Mittelachse des durch die Spreizbacken 4 gebildeten Zylinders erstreckt. Alternativ können auch hier andere Querschnittsformen zum Einsatz kommen. Die Vertiefungen 8 entsprechen zusammen etwa 40 % der Fläche der Umhüllenden der Außenwandungen 7 des Spreizbackensatzes im geschlossenen Zustand des Expansionskopfes 1.

Bei Durchführung eines Aufweitvorganges an einem Rohrende 13 wird an den durch die Vertiefungen 8 gebildeten Ausnehmungen jeweils eine Verformung des Rohrendes 13 gebildet. Bei Durchführung des ersten Aufweitvorgangs ist der Kraftaufwand auch für diese Ausführungsform im Vergleich zu einem ersten Aufweitvorgang mit herkömmlichem Expansionskopf ohne Vertiefungen 8 an der Außenfläche 7 der Spreizbacken 4 verringert. Eine Wiederholung des Aufweitvorganges nach einer Drehung des Aufweitwerkzeuges um etwa 30° relativ zum Rohrende 13 erfordert dagegen einen entsprechend erhöhten Kraftaufwand im Vergleich zum zweiten Aufweitvorgang mit herkömmlichem Expansionskopf ohne Vertiefungen 8 an der Außenfläche 7 der Spreizbacken 4.

Voranstehend wurde die Erfindung unter Bezugnahme auf bevorzugte Ausführungsformen im Detail erläutert, wobei diese Beispiele nicht als einschränkend aufgefasst werden sollen.

## Patentansprüche

1. Expansionskopf (1) für Aufweitwerkzeuge für hohle Werkstücke, insbesondere für die Enden von Kunststoffrohren und Metall-Kunststoff-Verbundrohren, umfassend:
- eine Überwurfkappe (2) mit einem radial einwärts gerichteten Führungsflansch (3), und
- einen Satz von sektorförmig ausgebildeten Spreizbacken (4), die jeweils einzeln durch einen Innenflanschsektor (5), der mit dem Führungsflansch (3) überlappt, in der Überwurfkappe (2) radial beweglich aufgenommen sind, wobei der Satz von sektorförmig ausgebildeten Spreizbacken (4) zwischen einem geschlossenen Zustand und einem Expansionszustand beweglich ist und im geschlossenen Zustand durch eine Umhüllende der Außenwandungen (7) des Satzes von Spreizbacken (4) annähernd eine Zylindermantelfläche ausgebildet ist, wobei jede Spreizbacke (4) wenigstens eine sich in Richtung der Längsachse der Spreizbacken (4) erstreckende Vertiefung aufweist
**dadurch gekennzeichnet, dass**
die Fläche der Außenwandungen (7) des Satzes von Spreizbacken (4) im geschlossenen Zustand des Expansionskopfes (1) 25 % bis 75 % der Fläche der Umhüllenden der Außenwandungen (7) des Spreizbackensatzes entspricht.

2. Expansionskopf (1) nach Anspruch 1, **dadurch gekennzeichnet, dass** die Vertiefung (8) ungefähr in der Mitte der Außenwandung (7) der Spreizbacke (4) angeordnet ist.

3. Expansionskopf (1) nach Anspruch 1, **dadurch gekennzeichnet, dass** mindestens eine der Spreizbacken (4) mindestens zwei Vertiefungen (8) aufweist.

4. Expansionskopf (1) nach Anspruch 3, **dadurch gekennzeichnet, dass** jeweils eine Vertiefung (8) an jedem seitlichen Rand der Außenwandung (7) jeder Spreizbacke (4) angeordnet ist.

5. Expansionskopf (1) nach Anspruch 4, **dadurch gekennzeichnet, dass** sich die beiden jeweils am seitlichen Rand der Außenwandung (7) angeordneten Vertiefungen (8) jeweils über die gesamte Dicke der Spreizbacke (4) erstrecken.

6. Expansionskopf (1) nach Anspruch 3, **dadurch gekennzeichnet, dass** die Vertiefungen (8) etwa symmetrisch zu einer in Längsrichtung des Expansionskopfes (1) verlaufenden Mittelachse der Außenwandung (7) der jeweiligen Spreizbacke (4) angeordnet sind.

7. Expansionskopf (1) nach einem der Ansprüche 1 bis 6, **dadurch gekennzeichnet, dass** die Spreizbacken (4) an ihrer der Überwurfkappe (2) abgewandten Seite eine Verjüngung (9) oder Fase aufweisen.

8. Expansionskopf (1) nach einem der Ansprüche 1 bis 7, **dadurch gekennzeichnet, dass** die Kanten der Spreizbacken (4) abgerundet, gebrochen oder angefast sind.

9. Expansionskopf (1) nach einem der Ansprüche 1 bis 8, **dadurch gekennzeichnet, dass** die Fläche der Außenwandungen (7) des Satzes von Spreizbacken (4) im geschlossenen Zustand des Expansionskopfes (1) 40 % bis 60 % der Fläche der Umhüllenden der Außenwandungen (7) des Spreizbackensatzes entspricht.

10. Aufweitwerkzeug für hohle Werkstücke, insbesondere für die Enden von Rohren aus Kunststoffen und aus mit Kunststoffen überzogenen Metallen, umfassend einen Expansionskopf (1) nach einem der Ansprüche 1 bis 9.

## Claims

1. Expansion head (1) for expansion tools for hollow workpieces, in particular for the ends of plastics tubes and metal/plastics composite tubes, comprising
- a union cap (2) with a radially inwardly directed guide flange (3), and
- a set of expanding jaws (4) which are of sector-shaped design and are in each case individually accommodated in a radially movable manner in the union cap (2) by an inner flange sector (5), which overlaps with the guide flange (3), wherein the set of expanding jaws (4) of sector-shaped design is movable between a closed state and an expansion state, and, in the closed state, a cylinder jacket surface is approximately formed by an envelope of the outer walls (7) of the set of expanding jaws (4), wherein each expanding jaw (4) has at least one depression extending in the direction of the longitudinal axis of the expanding jaws (4),
**characterized in that**
the area of the outer walls (7) of the set of expanding jaws (4) corresponds, in the closed state of the expansion head (1), by 25% to 75% to the area of the envelope of the outer walls (7) of the set of expanding jaws.

2. Expansion head (1) according to Claim 1, **characterized in that** the depression (8) is arranged approximately in the centre of the outer wall (7) of the expanding jaw (4).

3. Expansion head (1) according to Claim 1, **characterized in that** at least one of the expanding jaws (4) has at least two depressions (8).

4. Expansion head (1) according to Claim 3, **characterized in that** a respective depression (8) is arranged on each lateral edge of the outer wall (7) of each expanding jaw (4).

5. Expansion head (1) according to Claim 4, **characterized in that** the two depressions (8) arranged in each case on the lateral edge of the outer wall (7) each extend over the entire thickness of the expanding jaw (4).

6. Expansion head (1) according to Claim 3, **characterized in that** the depressions (8) are arranged approximately symmetrically to a centre axis, which runs in the longitudinal direction of the expansion head (1), of the outer wall (7) of the respective expanding jaw (4).

7. Expansion head (1) according to one of Claims 1 to 6, **characterized in that** the expanding jaws (4) have a taper (9) or bevel on their side facing away from the union cap (2).

8. Expansion head (1) according to one of Claims 1 to 7, **characterized in that** the edges of the expanding jaws (4) are rounded, broken or bevelled.

9. Expansion head (1) according to one of Claims 1 to 8, **characterized in that** the area of the outer walls (7) of the set of expanding jaws (4) in the closed state of the expansion head (1) corresponds by 40% to 60% to the area of the envelope of the outer walls (7) of the set of expanding jaws.

10. Expansion tool for hollow workpieces, in particular for the ends of pipes made of plastics and made of metals covered with plastics, comprising an expansion head (1) according to one of Claims 1 to 9.

## Revendications

1. Tête d'expansion (1) pour élargisseurs pour des pièces creuses, en particulier pour les extrémités de tubes en matière plastique et de tubes composites métal-matière plastique, comprenant:
- une coiffe à raccord (2) avec une bride de guidage (3) orientée radialement vers l'intérieur, et
- un ensemble de mâchoires d'expansion (4) configurées en forme de secteurs, qui sont logées chaque fois individuellement dans la coiffe à raccord (2) de façon mobile radialement par un secteur de bride intérieur (5), qui se recouvre avec la bride de guidage (3), dans laquelle l'ensemble de mâchoires d'expansion configurées en forme de secteurs (4) est mobile entre un état fermé et un état d'expansion et dans l'état fermé une surface latérale approximativement cylindrique est formée par une enveloppante des parois extérieures (7) de l'ensemble de mâchoires d'expansion (4), dans laquelle chaque mâchoire d'expansion (4) présente au moins un creux s'étendant dans la direction de l'axe longitudinal des mâchoires d'expansion (4),
**caractérisée en ce que** la surface des parois extérieures (7) de l'ensemble de mâchoires d'expansion (4) correspond, dans l'état fermé de la tête d'expansion (1), à 25 % à 75 % de la surface de l'enveloppante des parois extérieures (7) de l'ensemble de mâchoires d'expansion.

2. Tête d'expansion (1) selon la revendication 1, **caractérisée en ce que** le creux (8) est disposé environ au milieu de la paroi extérieure (7) de la mâchoire d'expansion (4).

3. Tête d'expansion (1) selon la revendication 1, **caractérisée en ce qu'**au moins une des mâchoires d'expansion (4) présente au moins deux creux (8).

4. Tête d'expansion (1) selon la revendication 3, **caractérisée en ce qu'**un creux (8) est respectivement disposé sur chaque bord latéral de la paroi extérieure (7) de chaque mâchoire d'expansion (4).

5. Tête d'expansion (1) selon la revendication 4, **caractérisée en ce que** les deux creux (8) disposés respectivement sur le bord latéral de la paroi extérieure (7) s'étendent respectivement sur toute l'épaisseur de la mâchoire d'expansion (4).

6. Tête d'expansion (1) selon la revendication 3, **caractérisée en ce que** les creux (8) sont disposés de façon sensiblement symétrique par rapport à un axe central de la paroi extérieure (7) de la mâchoire d'expansion respective (4) qui est orienté dans la direction longitudinale de la tête d'expansion (1).

7. Tête d'expansion (1) selon l'une quelconque des revendications 1 à 6, **caractérisée en ce que** les mâchoires d'expansion (4) présentent sur leur côté situé à l'opposé de la coiffe à raccord (2) un rétrécissement (9) ou un chanfrein.

8. Tête d'expansion (1) selon l'une quelconque des revendications 1 à 7, **caractérisée en ce que** les arêtes des mâchoires d'expansion (4) sont arrondies, brisées ou chanfreinées.

9. Tête d'expansion (1) selon l'une quelconque des revendications 1 à 8, **caractérisée en ce que** la surface des parois extérieures (7) de l'ensemble de mâchoires d'expansion (4) correspond, dans l'état fermé de la tête d'expansion (1), à 40 % à 60 % de la surface de l'enveloppante des parois extérieures (7) de l'ensemble de mâchoires d'expansion.

10. Elargisseur pour des pièces creuses, en particulier pour les extrémités de tubes en matières plastiques et en métaux revêtus de matières plastiques, comprenant une tête d'expansion (1) selon l'une quelconque des revendications 1 à 9.
